# EUROPÄISCHE PATENTANMELDUNG

(11) **EP 4 167 528 A1**
(43) Veröffentlichungstag der Anmeldung: **19.04.2023**
(21) Anmeldenummer: 22201731.1
(22) Anmeldetag: 14.10.2022
(51) Int. Cl.: H04L 12/18, H04L 65/403, H04N 7/15

(54) **GERICHTSSAAL-MEDIENSYSTEMSTEUERUNG**

(30) Priorität: 14.10.2021 DE 102021126609
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Verfahren zur Durchführung eines Installations- und/oder Konfigurationsprozesses einer Gerichtssaal-Mediensystemsteuerung mit den Verfahrensschritten Abfrage von Daten zur Installation und/oder Konfiguration, wobei die Daten auf einer separaten Konfigurationssteuereinheit gespeichert sind, Einlesen der Daten zur Installation und/oder Konfiguration, wobei die Daten für den betreffenden Gerichtssaal installations- und/oder konfigurationsrelevante Daten enthalten, Installation und/oder Konfiguration anhand der Daten zur Installation und/oder Konfiguration auf der zentralen Steuereinheit, sowie eine Gerichtssaal-Mediensystemsteuerung, das eine Matrix-Schaltung mit einer Mehrzahl von Quellschnittstellen und Ausgabeschnittstellen, eine zentrale Steuereinheit und eine separate Konfigurationssteuereinheit aufweist, wobei die separate Konfigurationssteuereinheit über eine Steckverbindung mit der zentralen Steuereinheit verbunden ist.

## Beschreibung

Die Erfindung betrifft ein Verfahren zur Durchführung eines Installations- und/oder Konfigurationsprozesses einer Gerichtssaal-Mediensystemsteuerung mit den Verfahrensschritten Abfrage von Daten zur Installation und/oder Konfiguration, wobei die Daten auf einer separaten Konfigurationssteuereinheit gespeichert sind, Einlesen der Daten zur Installation und/oder Konfiguration, wobei die Daten für den betreffenden Gerichtssaal installations- und/oder konfigurationsrelevante Daten enthalten, Installation und/oder Konfiguration anhand der Daten zur Installation und/oder Konfiguration auf der zentralen Steuereinheit, sowie eine Gerichtssaal-Mediensystemsteuerung, das eine Matrix-Schaltung mit einer Mehrzahl von Quellschnittstellen und Ausgabeschnittstellen, eine zentrale Steuereinheit und eine separate Konfigurationssteuereinheit aufweist, wobei die separate Konfigurationssteuereinheit über eine Steckverbindung mit der zentralen Steuereinheit verbunden ist.

### Stand der Technik

Der Einsatz eines Mediasystems in der Justiz, insbesondere in einem Gerichtssaal, bietet Vorteile in Hinblick auf eine Vereinfachung der Kommunikation zwischen den Justizbehörden. So kann z.B. die Meinung von Sachverständigen eingeholt werden, die entfernt vom Sitzungsort wohnen. Auch spezialisierte Dolmetscher können einbezogen werden, vor allem bei Verfahren an Gerichten in ländlichen Räumen.

Neben der Möglichkeit, Videokonferenzen mit dieser Lösung durchzuführen, ist es ebenso möglich, auch im Zuge der Einführung der elektronischen Aktenführung unsere Lösung einzubinden. Somit können zwei Digitalisierungsschwerpunkte im Bereich der Justiz mit einer Lösung umgesetzt werden.

Die Schrift CN 10 184 72 20 A offenbart eine digitale Gerichtsverhandlungssteuerungsvorrichtung, die die folgenden Module umfasst: eine zentrale Verarbeitungseinheit, ein Matrixschaltmodul, ein Netzwerkschnittstellenmodul, einen Video-/Audiocodierer, einen Video-/Audiodecodierer, ein Videoausgabesteuermodul, ein Audioausgabesteuermodul und eine Ausgabesteuerschnittstelle. Die zentrale Verarbeitungseinheit beendet die Gerichtsverhandlung wie die Vor-Ort-Anzeige, das Abspielen, die Beweisanzeige und ähnliches, indem sie das Matrixschaltmodul, das Netzwerkschnittstellenmodul, das Videoausgangssteuermodul, das Audioausgangssteuermodul und die Ausgangssteuerschnittstelle steuert.

Die Patentschrift CN 10 184 0532 A offenbart ein digitales Gerichtsprozess-Informationsverarbeitungssystem, das die folgenden Vorrichtungen umfasst: eine digitale Gerichtsprozess-Steuerungsvorrichtung, einen Informationsmanagement-Server, eine Speichervorrichtung, eine Video-Audio-Matrix, eine Kamera, ein Mikrofon, einen Audioplayer, eine Videoanzeigevorrichtung und eine zentrale Steuereinheit, wobei die digitale Gerichtsprozess-Steuerungsvorrichtung eine Steueranweisung des Informationsmanagement-Servers empfängt, um die Speichervorrichtung, die Video-Audio-Matrix, den Audioplayer, die Videoanzeigevorrichtung und die zentrale Steuereinheit zu steuern, alle gerichtlichen Prozesse eines Gerichts zu vervollständigen und alle Materialien eines Falls zu verarbeiten, zu bearbeiten, zu archivieren und zu speichern.

Es ist daher eine Aufgabe der Erfindung, ein Verfahren zur Durchführung eines Installations- und/oder Konfigurationsprozesses einer Gerichtssaal-Mediensystemsteuerung bereitzustellen, mit dem das Mediasystem komfortabel und flexibel an unterschiedliche Konfigurationen der Gerichtssaal-Mediensystemsteuerung anpassbar ist. Es ist ebenfalls Aufgabe der Erfindung, eine Gerichtssaal-Mediensystemsteuerung bereitzustellen, die komfortabel bedienbar, flexibel sowie vertrauenswürdig ist.

Die Aufgabe wird mittels des Verfahrens zur Durchführung eines Installations- und/oder Konfigurationsprozesses eines Gerichtssaal-Mediensystems gelöst. Vorteilhafte Ausführungen der Erfindung sind in den Unteransprüchen dargelegt.

Das erfindungsgemäße Verfahren zur Durchführung eines Installations- und/oder Konfigurationsprozesses einer Gerichtssaal-Mediensystemsteuerung weist vier Verfahrensschritte auf: Im ersten Verfahrensschritt wird ein Programm zur Installation und/oder Konfiguration einer Gerichtssaal-Mediensystemsteuerung auf einer zentralen Steuereinheit der Gerichtssaal-Mediensystemsteuerung ausgeführt. Die zentrale Steuereinheit verfügt dazu über einen Speicher und einen Prozessor. Mittels der zentralen Steuereinheit wird ein Gerichtssaal-Mediensystem gesteuert.

Im zweiten Verfahrensschritt erfolgt eine Abfrage von Daten zur Installation und/oder Konfiguration. Die Daten sind im Speicher einer separaten Konfigurationssteuereinheit gespeichert. Der Speicher der zentralen Steuereinheit enthält also nicht die Daten zur Installation und/oder Konfiguration. Der Speicher der zentralen Steuereinheit kann daher gering bemessen sein. Gleichzeitig können auf der separaten Konfigurationssteuereinheit Daten zur Installation und/oder Konfiguration gespeichert sein, mit denen eine Mehrzahl von unterschiedlich ausgeführten Gerichtssaal-Mediensystemsteuerungen konfiguriert werden kann.

Im dritten Verfahrensschritt werden die Daten zur Installation und/oder Konfiguration eingelesen. Die Daten zur Installation und/oder Konfiguration werden in den Speicher der zentralen Steuereinheit eingelesen. Die Daten enthalten für den betreffenden Gerichtssaal installations- und/oder konfigurationsrelevante Daten.

Im vierten Verfahrensschritt erfolgt eine Installation und/oder Konfiguration anhand der Daten zur Installation und/oder Konfiguration auf der zentralen Steuereinheit. Nach der Installation und/oder Konfiguration ist eine Gerichtssaal-Mediensystemsteuerung betriebsbereit konfiguriert.

Die in der separaten Konfigurationssteuereinheit gespeicherten Daten zur Installation und/oder Konfiguration können je nach Ausführung der Gerichtssaal-Mediensystemsteuerung geändert und angepasst werden. Mittels des erfindungsgemäßen Verfahrens können daher auch unterschiedlich gestaltete Gerichtssaal-Mediensystemsteuerungen installiert und/oder konfiguriert werden, wobei die Daten zur Installation und/oder Konfiguration auf nur einer separaten Konfigurationssteuereinheit gespeichert sind. Das Verfahren ermöglicht daher eine flexible, aber einer jeweiligen Gerichtssaal-Mediensystemsteuerung und deren Peripheriegeräten angepasste Installation und/oder Konfiguration.

In einer Weiterbildung der Erfindung führt das Programm zur Installation und/oder Konfiguration in einem ersten Verfahrensschritt einen ersten Installations- und/oder Konfigurationsschritt aus. Der erste Installations- und/oder Konfigurationsschritt ist üblicherweise eine Erfassung der an die zentrale Steuereinheit angeschlossenen Peripheriegeräte, wobei Art und Anzahl der Peripheriegeräte festgestellt wird.

In einer weiteren Gestaltung der Erfindung ist der erste Installations- und/oder Konfigurationsschritt eine Standard-Installation und/oder Standard-Konfiguration. Zur Vereinfachung und Beschleunigung der Installation und/oder Konfiguration der Gerichtssaal-Mediensystemsteuerung wird eine Standard-Installation und/oder Standard-Konfiguration der Gerichtssaal-Mediensystemsteuerung durchgeführt. Die auf der separaten Konfigurationssteuereinheit gespeicherten Daten zur Installation und/oder Konfiguration weisen dementsprechend Informationen einer Standard-Ausführung der Gerichtssaal-Mediensystemsteuerung auf.

In einer Weiterbildung der Erfindung sind die Daten zur Installation und/oder Konfiguration auf der separaten Konfigurationssteuereinheit Daten für eine an den Gerichtssaal und/oder den Nutzer angepasste Installation und/oder Konfiguration. Die mittels der Gerichtssaal-Mediensystemsteuerung gesteuerten Peripheriegeräte können so individuell konfiguriert sein. Damit kann z.B. eine bestimmte Lautstärke und/oder Helligkeit eines bestimmten Peripheriegerätes angepasst werden.

In einer weiteren Ausführung der Erfindung werden auf der separaten Konfigurationssteuereinheit Konfigurationsdaten zur Hardware-Konfiguration und/oder Software-Konfiguration gespeichert und diese Konfigurationsdaten ausgelesen. Unterschiedlich ausgeführte Gerichtssaal-Mediensystemsteuerungen können unterschiedliche Hardware- und Software-Komponenten aufweisen, die mittels des erfindungsgemäßen Verfahrens ebenfalls installiert und/oder konfiguriert werden können. Diese Konfigurationsdaten zur Hardware-Konfiguration und/oder Software-Konfiguration sind auf der separaten Konfigurationssteuereinheit gespeichert und werden von der zentralen Steuereinheit ausgelesen.

In einer weiteren Ausgestaltung der Erfindung ist die separate Konfigurationssteuereinheit lösbar mit der zentralen Steuereinheit verbunden. Die separate Konfigurationssteuereinheit ist üblicherweise nur während der Ausführung des erfindungsgemäßen Verfahrens zur Durchführung eines Installations- und/oder Konfigurationsprozesses mit der zentralen Steuereinheit verbunden. Die Steuerung der Gerichtssaal-Mediensystemsteuerung wird durch die zentrale Steuereinheit durchgeführt.

In einer optionalen erfindungsgemäßen Weiterbildung ist die separate Konfigurationssteuereinheit direkt mit der zentralen Steuereinheit verbunden. Die Kommunikation zwischen separater Konfigurationssteuereinheit und zentraler Steuereinheit erfolgt hierbei direkt über die jeweiligen an die separate Konfigurationssteuereinheit und zentrale Steuereinheit angeschlossenen Kommunikationseinheiten. In einer erfindungsgemäßen Ausführungsform steht die separate Konfigurationssteuereinheit ausschließlich mit der zentralen Steuereinheit in Verbindung.

In einer weiteren Ausbildung der Erfindung wird die Abfrage gesendet. Die zentrale Steuereinheit sendet die Abfrage von Daten zur Installation und/oder Konfiguration an die separate Konfigurationssteuereinheit und signalisiert so die Bereitschaft, Daten zur Installation und/oder Konfiguration von der separaten Konfigurationssteuereinheit zu empfangen.

In einer Weiterbildung der Erfindung wird die Abfrage in einer Steuereinheit der Konfigurationssteuereinheit verarbeitet. Die von der zentralen Steuereinheit an die Konfigurationssteuereinheit gesendete Abfrage von Daten zur Installation und/oder Konfiguration wird von der Steuereinheit derart verarbeitet, dass die von der zentralen Steuereinheit in der Abfrage angeforderten Daten zur Installation und/oder Konfiguration bereitgestellt werden, um von der zentralen Steuereinheit gesendet zu werden.

In einer weiteren Ausführung der Erfindung werden die Daten zur Installation und/oder Konfiguration von der Steuereinheit der Konfigurationssteuereinheit aus einem Speicher der Konfigurationssteuereinheit ausgelesen. Die von der zentralen Steuereinheit an die Konfigurationssteuereinheit gesendete Abfrage von Daten zur Installation und/oder Konfiguration wird von der Steuereinheit der Konfigurationssteuereinheit derart verarbeitet, dass die von der zentralen Steuereinheit in der Abfrage angeforderten Daten zur Installation und/oder Konfiguration aus dem Speicher der Konfigurationssteuereinheit ausgelesen und bereitgestellt werden, um von der zentralen Steuereinheit gesendet zu werden.

In einer weiteren Ausgestaltung der Erfindung werden die Daten zur Installation und/oder Konfiguration von der Steuereinheit der Konfigurationssteuereinheit an die zentrale Steuereinheit gesendet. Die von der zentralen Steuereinheit abgefragten und von der Konfigurationssteuereinheit bereitgestellten Daten zur Installation und/oder Konfiguration werden an die zentrale Steuereinheit gesendet. Ein im Speicher der zentralen Steuereinheit gespeichertes Programm zur Installation und/oder Konfiguration einer Gerichtssaal-Mediensystemsteuerung führt die eigentliche Installation und/oder Konfiguration der Gerichtssaal-Mediensystemsteuerung aus. Die Konfigurationssteuereinheit stellt lediglich die Daten zur Installation und/oder Konfiguration der Gerichtssaal-Mediensystemsteuerung bereit.

In einer weiteren Ausbildung der Erfindung erfolgt das Auslesen der Konfigurationsdaten durch die Konfigurationssteuereinheit selbst. Die Daten zur Installation und/oder Konfiguration werden durch die Steuereinheit der Konfigurationssteuereinheit aus dem Speicher der Konfigurationssteuereinheit ausgelesen und an die zentrale Steuereinheit gesendet. Speicherung und Auslesen der Daten zur Installation und/oder Konfiguration erfolgt durch die Konfigurationssteuereinheit. Die Aufgaben von zentraler Steuereinheit und Konfigurationssteuereinheit sind klar voneinander getrennt und ermöglichen eine geringere Komplexität der sowohl auf der zentralen Steuereinheit als auch auf der Konfigurationssteuereinheit ausführbaren Programme zur Installation und/oder Konfiguration der Gerichtssaal-Mediensystemsteuerung. In gleicher Weise erfordern die jeweiligen Programme geringeren Speicherplatz.

In einer vorteilhaften Ausführung der Erfindung beinhalten die Konfigurationsdaten Informationen zur Konfiguration der mit der zentralen Steuereinheit verbundenen Peripheriegeräte. Die Peripheriegeräte können unterschiedliche Hardware- und Software-Komponenten aufweisen. Die Informationen sind in der Konfigurationssteuereinheit gespeichert und werden der zentralen Steuereinheit zugesendet. Die Peripheriegeräte werden mittels des erfindungsgemäßen Verfahrens installiert und/oder konfiguriert.

In einer Weiterbildung der Erfindung beinhalten die mit der zentralen Steuereinheit verbundenen Peripheriegeräte Quellen und/oder Ausgabeeinrichtungen. Eine Quelle für den Bild- und/oder Toninhalt sind im Rahmen dieser Schrift ein oder mehrere Geräte, die dazu eingerichtet sind, Bild- und/oder Toninhalte aufzunehmen oder mit Geräten verbunden sind, die dazu eingerichtet sind, Bild- und/oder Toninhalte aufzunehmen. Beispiele für Quellen sind Kameras und/oder Mikrophone, die optional noch über Präsentationsumschalter/Video Scaler und/oder Medienplayer und/oder Audio-Mischpult verbunden sind. Die Quellen können auch mobile Datengeräte wie Laptops, Notebooks oder Notepads sein, auf denen Bild- und/oder Toninhalte gespeichert sind. Diese Geräte weisen üblicherweise auch integrierte Kameras und Mikrophone auf, die Bild- und/oder Toninhalte aufnehmen können.

Unter einer Ausgabeeinrichtung wird eine Einrichtung verstanden, die zur Ausgabe von Bildinhalten und/oder Toninhalten geeignet ist. Die Ausgabeeinrichtung verfügt dazu über geeignete Komponenten oder ist mit geeigneten Komponenten verbunden. Diese Komponenten sind z.B. ein oder mehrere Bildschirme - auch mit Touch-Funktion - und ein oder mehrere Lautsprecher.

Diese Peripheriegeräte können unterschiedliche Hardware- und Software-Komponenten aufweisen. Die Peripheriegeräte werden mittels des erfindungsgemäßen Verfahrens installiert und/oder konfiguriert.

In einer weiteren Ausführung der Erfindung beinhalten die Konfigurationsdaten Informationen über nur einen Teil der Quellen. Peripheriegeräte, insbesondere Quellen, sind üblicherweise permanent mit der zentralen Steuerung der Gerichtssaal-Mediensystemsteuerung verbunden. Die Gerichtssaal-Mediensystemsteuerung, die mittels des erfindungsgemäßen Verfahrens installiert und/oder konfiguriert wird, kann jedoch unterschiedliche Quellen aufweisen, die nicht permanent mit der zentralen Steuerung verbunden sind, sondern mittels eines freien Anschlusses mit der zentralen Steuerung temporär verbunden werden, z.B. Quellen von Zeugen oder Gutachtern. Für derartige Quellen beinhalten die Konfigurationsdaten keine Informationen bzw. die Konfigurationsdaten beinhalten Informationen für eine Standard-Installation und/oder Standard-Konfiguration dieser Quellen.

In einer weiteren Gestaltung der Erfindung beinhalten die Konfigurationsdaten Informationen aller mit der zentralen Steuereinheit verbundenen Ausgabeeinrichtungen. Die Ausgabeeinrichtungen sind üblicherweise permanent mit der zentralen Steuerung der Gerichtssaal-Mediensystemsteuerung verbunden. Die Ausgabeeinrichtungen können unterschiedliche Hardware- und Software-Komponenten aufweisen. Die Ausgabeeinrichtungen werden mittels des erfindungsgemäßen Verfahrens installiert und/oder konfiguriert.

In einer weiteren Ausbildung der Erfindung steuert den Zugriff auf die Konfigurationsdaten der Konfigurationssteuereinheit ein auf der Konfigurationssteuereinheit angeordneter Prozessor. Optional kann mittels des Prozessors ein im Speicher der Konfigurationssteuereinheit gespeichertes Programm ausgeführt werden, mit dem die Daten zur Installation und/oder Konfiguration in den Speicher der Konfigurationssteuereinheit eingegeben und bearbeitet werden können.

In einer Weiterbildung der Erfindung greift der Prozessor auf einen Speicher der Konfigurationssteuereinheit zu und liest die Konfigurationsdaten aus. Der Prozessor steuert den Zugriff der Konfigurationssteuereinheit auf die Konfigurationsdaten, die in dem Speicher der Konfigurationssteuereinheit gespeichert sind. Der Prozessor liest die Konfigurationsdaten aus dem Speicher aus, optional kann der Prozessor die Daten zur Installation und/oder Konfiguration der Gerichtssaal-Mediensystemsteuerung in den Speicher der Konfigurationssteuereinheit eingeben und bearbeiten. Der Speicher der Konfigurationssteuereinheit verfügt in diesem Fall über ein geeignetes Programm.

In einer weiteren Ausführung der Erfindung wird die Konfigurationssteuereinheit über eine Steckverbindung mit der zentralen Steuereinheit verbunden. Die Konfigurationssteuereinheit wird üblicherweise nur für die Zeitdauer der Durchführung des erfindungsgemäßen Verfahrens mit der zentralen Steuereinheit verbunden. Mittels einer Steckverbindung ist die Verbindung einfach herstellbar und ebenso einfach wieder zu lösen.

In einer Weiterbildung der Erfindung ist die Steckverbindung eine modulare Steckverbindung. Modulare Steckverbindungen bieten flexible Möglichkeiten, unterschiedliche Gehäusevarianten und -kombinationen der zentralen Steuereinheit und der Konfigurationssteuereinheit miteinander zu verbinden.

In einer weiteren Gestaltung der Erfindung werden an die Gerichtssaal-Mediensystemsteuerung angeschlossene Peripheriegeräte, Funktionalitäten und/oder Anzeigeinhalten von anderen an die Gerichtssaal-Mediensystemsteuerung angeschlossenen Peripheriegeräten aktiviert. Neben Installation und/oder Konfiguration der angeschlossenen Peripheriegeräte, Funktionalitäten und/oder Anzeigeinhalten von anderen an die Gerichtssaal-Mediensystemsteuerung angeschlossenen Peripheriegeräten werden diese auch aktiviert und stehen einem Nutzer der Gerichtssaal-Mediensystemsteuerung zur Verfügung.

In einer weiteren Ausbildung der Erfindung werden die Funktionalität und/oder die ausgegebenen Anzeigeinhalte von anderen an die zentrale Steuereinheit angeschlossenen Peripheriegeräten konfiguriert. Neben Installation und/oder Konfiguration der Funktionalitäten und/oder Anzeigeinhalten von anderen an die Gerichtssaal-Mediensystemsteuerung angeschlossenen Peripheriegeräten werden diese auch aktiviert und stehen einem Nutzer der Gerichtssaal-Mediensystemsteuerung zur Verfügung.

In einer weiteren Ausführung der Erfindung ist eines der Peripheriegeräte ein separat an die zentrale Steuereinheit angeschlossenes separates Control-Panel. Das Control-Panel ist die zentrale Kontroll- bzw. Steuerungskomponente für die Steuerung der Gerichtssaal-Mediensystemsteuerung. Es wird von dem Vorsitzenden Richter oder einer dafür bestimmten Person bedient. Ein Bediener kann mittels des Control-Panels einen oder mehrere Anschlüsse als Quellen eines Bild- und/oder Toninhaltes auswählen und ein oder mehrere Anschlüsse als Ausgabeeinrichtungen auswählen, über die der empfangene Bild- und/oder Toninhalt ausgegeben wird. Control-Panel und separate Steuereinheit sind dazu über geeignete Schnittstellen miteinander verbunden.

In einer weiteren Ausbildung der Erfindung werden die durch das separate Control-Panel steuerbaren Peripheriegeräte konfiguriert. Ein Bediener kann mittels des Control-Panels die Gerichtssaal-Mediensystemsteuerung steuern. Der Bediener des Control-Panels wählt mittels des Control-Panels eine der Quellen zum Empfang der Bild- und/oder Toninhalte aus. Zusätzlich kann der Bediener die ausgewählten Bild- und/oder Toninhalte konfigurieren und bearbeiten, z.B. ausschneiden, zuschneiden oder die Lautstärke ändern.

In einer weiteren Ausgestaltung der Erfindung werden die auf dem Control-Panel angezeigten Ausgabeinhalte konfiguriert. Der Bediener des Control-Panels wählt mittels des Control-Panels eine oder eine Mehrzahl der Ausgabeeinrichtungen zur Ausgabe der von einer Quelle empfangenen Bild- und/oder Toninhalte aus und kann diese konfigurieren und bearbeiten, z.B. ausschneiden, zuschneiden oder die Lautstärke ändern. Die empfangenen Bild- und/oder Toninhalte werden dann auf ausgewählten Ausgabeeinrichtungen ausgegeben.

In einer weiteren erfindungsgemäßen Ausgestaltung wird auf die separate Konfigurationssteuereinheit und/oder auf die auf der separaten Konfigurationssteuereinheit gespeicherten Konfigurationsdaten ausschließlich während des Installationsprozesses zugegriffen. Während des Betriebes oder während des Hochfahrens des Gerichtssaal-Mediensystems erfolgt kein weiterer Zugriff auf die auf der separaten Konfigurationssteuereinheit gespeicherten Konfigurationsdaten. Dies hat den Vorteil, dass das Gerichtssaal-Mediensystem als geschlossenes System betrieben werden kann. Das Gerichtssaal-Mediensystem wird so als geschlossenes System betrieben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems.

Die Aufgabe wird weiterhin mittels der Gerichtssaal-Mediensystemsteuerung, das dafür vorgesehen und dafür geeignet ist, Inhalte zu empfangen und auf verschiedenen Ausgabeeinrichtungen auszugeben, gelöst. Vorteilhafte Ausführungen der Erfindung sind ebenfalls in den Unteransprüchen dargelegt.

Die erfindungsgemäße Gerichtssaal-Mediensystemsteuerung, die dafür vorgesehen und dafür geeignet ist, Inhalte zu empfangen und auf verschiedenen Ausgabeeinrichtungen auszugeben, weist eine Matrix-Schaltung auf. Die Matrix-Schaltung weist eine Mehrzahl von Quell-Schnittstellen für den separaten Anschluss von Quellen auf, an denen eine Mehrzahl von Quellen angeschlossen ist und über die Bild- und/oder Toninhalte empfangbar sind. Die Matrix-Schaltung weist außerdem eine Mehrzahl von Ausgabe-Schnittstellen für den separaten Anschluss von Ausgabeeinrichtungen auf. Über die Ausgabe-Schnittstellen sind die Bild- und/oder Toninhalte ausgebbar. Mittels der Matrix-Schaltung werden die von den Quellen gelieferten Bild- und/oder Toninhalte derart geschaltet, dass die Bild- und Toninhalte auf allen, einer Mehrzahl oder auch nur auf einer einzelnen Ausgabeeinrichtung ausgegeben werden. Alle Quellen und ebenso alle Ausgabeeinrichtungen sind dabei mit der Matrix-Schaltung verbunden. Die Anbindung der zu steuernden Geräte kann über Ethernet, RS-232, Infrarot, Relais oder generelle I/O Ports erfolgen.

Die erfindungsgemäße Gerichtssaal-Mediensystemsteuerung weist außerdem eine zentrale Steuereinheit auf, die über die Steuerungsausgangsschnittstelle und die Steuerungseingangsschnittstelle an die Matrix-Schaltung angeschlossen ist. Auf der zentralen Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der zentralen Steuereinheit sind außerdem die Steuerbefehle der an die Matrix-Schaltung angeschlossenen Ausgabeeinrichtungen und Quellen gespeichert.

Die erfindungsgemäße Gerichtssaal-Mediensystemsteuerung weist ebenfalls ein Control-Panel auf, das über die Control-Schnittstelle an die zentrale Steuereinheit angeschlossen ist. Das Control-Panel ist die zentrale Kontroll- bzw. Steuerungskomponente für die Steuerung des erfindungsgemäßen Gerichtssaal-Mediensystems. Es wird von dem Vorsitzenden oder einer dafür bestimmten Person bedient. Das Control-Panel ist im Gerichtssaal selbst angeordnet und wird in einer optionalen Ausgestaltung der Erfindung am Platz des Vorsitzenden angebracht, kann aber an den Arbeitsplatz einer beauftragten Person weitergeleitet werden. In einer weiteren optionalen Ausgestaltung der Erfindung ist das Control-Panel ausschließlich aus dem Gerichtssaal heraus steuerbar. Dadurch besteht die Möglichkeit das Gerichtssaal-Mediensystem als geschlossenes System zu betreiben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Gerichtssaal-Mediensysteme unterliegen hierbei besonderen Anforderungen. Zum einem muss gewährleistet sein, dass Gerichtssaal-Mediensysteme nicht von außen durch Dritte korrumpiert werden können. Hierfür ist es in einer optionalen Ausgestaltung der Erfindung vorgesehen, dass das Gerichtssaal-Mediensystem als geschlossenes System betrieben wird. In einer besonders bevorzugten Ausführungsform wird das Gerichtssaal-Mediensystem während eines Gerichtsverfahrens als geschlossenes System betrieben. Zum anderen muss das Gerichtssaal-Mediensystem darauf ausgelegt ein, dass den Verfahrensbeteiligten ihr beispielsweise im deutschen Grundgesetz verankertes Recht auf rechtliches Gehör gewährleistet werden kann - allerdings nur insoweit, wie dies der Vorsitzende Richter zulässt, damit beispielsweise die Gerichtsverhandlung selbst nicht als Podium missbraucht werden kann. Andernfalls könnte dem Gericht selbst Verfahrensfehler angelastet werden, oder nicht genehmigte Inhalte eingebracht und dargestellt werden.

Zur Ausgabe der Bild- und/oder Toninhalte weist die erfindungsgemäße Gerichtssaal-Mediensystemsteuerung eine Mehrzahl von Ausgabe-Einrichtungen auf, die jeweils separat an die Matrix-Schaltung angeschlossen sind. Die Ausgabe-Einrichtungen sind vorzugsweise berührungssensitive Bildschirme, die zur Präsentation medialer Bild- und Toninhalte vorgesehen sind. Die Größe und Anzahl dieser Bildschirme ist abhängig von der Größe des Sitzungssaales. Der oder die Bildschirme sind an einer leicht zugänglichen, für alle Sitzungsteilnehmer einsehbaren Stelle im Sitzungssaal angebracht.

Die Konfigurationssteuereinheit ist üblicherweise nur für die Zeitdauer der Durchführung des erfindungsgemäßen Verfahrens mit der zentralen Steuereinheit verbunden. Mittels einer Steckverbindung ist die Verbindung einfach herstellbar und ebenso einfach wieder zu lösen.

In einer Weiterbildung der Erfindung ist die Matrix-Schaltung durch die zentrale Steuereinheit steuerbar. Auf der zentralen Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der zentralen Steuereinheit sind außerdem die Steuerbefehle der an die Matrix-Schaltung angeschlossenen Ausgabeeinrichtungen und Quellen gespeichert.

In einer weiteren Ausführung der Erfindung sind an den Ausgabeschnittstellen unterschiedliche Ausgabeeinrichtungen angeschlossen. Die Matrix-Schaltung weist eine Mehrzahl von Ausgabeschnittstellen für den separaten Anschluss von Ausgabeeinrichtungen auf, wobei über die Ausgabeschnittstellen die Bild- und/oder Toninhalte ausgebbar sind. Vorzugsweise ist jede Ausgabeeinrichtung mittels jeweils genau eines Anschlusses mit der Matrix-Schaltung verbunden, wobei ein Anschluss eine oder eine Mehrzahl von Schnittstellen aufweisen kann. Damit ist jede Ausgabeeinrichtung genau identifiziert und von den weiteren an der Matrix-Schaltung angeschlossenen Ausgabeeinrichtungen abgegrenzt. Zusätzlich kann eine genau definierte Ausgabeeinrichtung zur Ausgabe von Bild- und/oder Toninhalten angewählt werden.

In einer weiteren Ausgestaltung der Erfindung ist an die Quellenschnittstellen mindestens eine steuerbare Quelle angeschlossen. Die von der steuerbaren Quelle bereitgestellten Bild- und/oder Toninhalte sind bearbeitbar. Insbesondere können die angezeigten Bild- und/oder Toninhalte über die separate Steuereinheit z.B. ausgeschnitten und/oder zugeschnitten werden und/oder die Lautstärke geändert werden.

In einer weiteren Gestaltung der Erfindung ist an die zentrale Steuereinheit ein Control-Panel angeschlossen. Das Control-Panel ist dafür vorgesehen und dafür geeignet, die Ausgabe von Inhalten auf den Ausgabeeinrichtungen zu steuern. Das Control-Panel ist die zentrale Kontroll- bzw. Steuerungskomponente für die Steuerung der erfindungsgemäßen Gerichtssaal-Mediensystemsteuerung. Es wird von dem Vorsitzenden oder einer dafür bestimmten Person bedient. Das Control-Panel wird am Platz des Vorsitzenden angeordnet, kann aber an den Arbeitsplatz einer beauftragten Person weitergeleitet werden

Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

In einer weiteren Ausbildung der Erfindung weist die separate Konfigurationssteuereinheit einen Prozessor auf. Mittels des Prozessors ist der Zugriff der Konfigurationssteuereinheit auf die Konfigurationsdaten steuerbar, die in dem Speicher der Konfigurationssteuereinheit gespeichert sind. Der Prozessor liest die Konfigurationsdaten aus dem Speicher aus, optional kann der Prozessor die Daten zur Installation und/oder Konfiguration der Gerichtssaal-Mediensystemsteuerung in den Speicher der Konfigurationssteuereinheit eingeben und bearbeiten. Der Speicher der Konfigurationssteuereinheit verfügt in diesem Fall über ein geeignetes Programm.

In einer Weiterbildung der Erfindung weist die separate Konfigurationssteuereinheit einen Speicher auf. Der Speicher weist die Daten zur Installation und/oder Konfiguration auf. Gleichzeitig können auf der separaten Konfigurationssteuereinheit Daten zur Installation und/oder Konfiguration gespeichert sein, mit denen eine Mehrzahl von unterschiedlich ausgeführten Gerichtssaal-Mediensystemsteuerungen konfiguriert werden können.

Ausführungsbeispiele der erfindungsgemäßen Gerichtssaal-Mediensystemsteuerung, die dafür vorgesehen und dafür geeignet ist, Inhalte zu empfangen und auf verschiedenen Ausgabeeinrichtungen auszugeben, und des erfindungsgemäßen Verfahrens zur Durchführung eines Installations- und/oder Konfigurationsprozesses einer Gerichtssaal-Mediensystemsteuerung sind in den Zeichnungen schematisch vereinfacht dargestellt und werden in der nachfolgenden Beschreibung näher erläutert.

Es zeigen:
- Fig. 1: Die erfindungsgemäße Gerichtssaal-Mediensystemsteuerung mit zwei Ausgabeeinrichtungen
- Fig. 2: Die erfindungsgemäße Gerichtssaal-Mediensystemsteuerung mit fünf Ausgabeeinrichtungen
- Fig. 3: Die erfindungsgemäße Gerichtssaal-Mediensystemsteuerung mit Steuerung der steuerbaren Quelle
- Fig. 4: Die erfindungsgemäßen Gerichtssaal-Mediensystemsteuerung einsatzbereit angeordnet in einem Gerichtssaal
- Fig. 5: Die erfindungsgemäße Gerichtssaal-Mediensystemsteuerung mit der Anordnung der unterschiedlichen Bereiche
- Fig. 6: Ein Ablaufdiagramm des erfindungsgemäßen Verfahrens zur Durchführung eines Installations- und/oder Konfigurationsprozesses einer Gerichtssaal-Mediensystemsteuerung
- Fig. 7: Ein Ablaufdiagramm eines weiteren Ausführungsbeispiels des erfindungsgemäßen Verfahrens zur Durchführung eines Installations- und/oder Konfigurationsprozesses einer Gerichtssaal-Mediensystemsteuerung

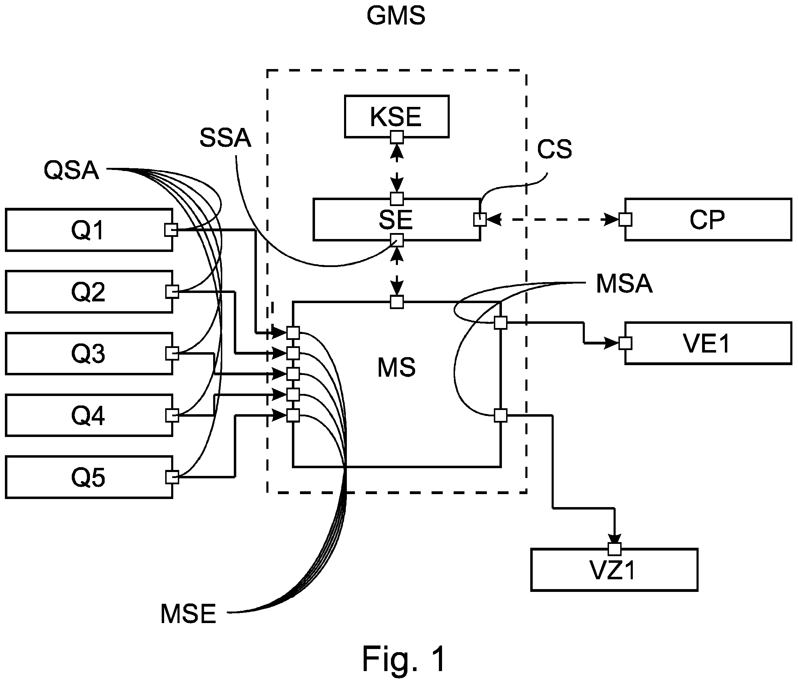

Fig. 1 zeigt eine Ansicht eines Ausführungsbeispiels der erfindungsgemäßen Gerichtssaal-Mediensystemsteuerung GMS. Die hier dargestellte Gerichtssaal-Mediensystemsteuerung GMS ist eine mögliche Standard-Konfiguration. Die erfindungsgemäße Gerichtssaal-Mediensystemsteuerung GMS weist die Matrix-Schaltung MS auf. Die Matrix-Schaltung MS weist eine Mehrzahl von Anschlüssen in Form von Quell-Schnittstellen MSE auf, über die die Matrix-Schaltung MS mit den Quellen Q1, Q2, Q3, Q4, Q5 verbunden ist. Jede Quell-Schnittstelle MSE ist mit genau einer Quelle Q1, Q2, Q3, Q4, Q5 verbunden. Jede Quelle Q1, Q2, Q3, Q4, Q5 weist dazu jeweils eine Schnittstelle QSA auf.

Die Matrix-Schaltung MS weist außerdem zwei Ausgabe-Schnittstellen MSA auf, mit denen jeweils eine Ausgabeeinrichtung VE1, VZ1 verbunden ist. Die erste Ausgabeeinrichtung VE1 ist in diesem Ausführungsbeispiel eine Ausgabeeinrichtung, die den Richtern zur Verfügung steht. Die erste Ausgabeeinrichtung VE1 dient ebenfalls als eine Ausgabeeinrichtung für die Justizmitarbeiter, aber auch als Regiemonitor, auf dem die für die zweite Ausgabeeinrichtung VZ1 bestimmten Bild- und Toninhalte angezeigt werden können. Die zweite Ausgabeeinrichtung VZ1 ist z.B. eine Ausgabeeinrichtung die für die Öffentlichkeit bestimmte Bild- und Toninhalte anzeigt. Die zweite Ausgabeeinrichtung VZ1 kann sich in einem anderen Raum als die erste Ausgabeeinrichtung VE1 befinden. Alle Ausgabeeinrichtungen VE1, VZ1 weisen Komponenten zur Darstellung von Bildinhalten und/oder Toninhalten auf und/oder sind mit solchen verbunden. Jede Ausgabeeinrichtung VE1, VZ1 weist ebenfalls eine Schnittstelle QSA auf.

Über die Steuerungseingangsschnittstelle MSS ist die Matrix-Schaltung MS mit der zentralen Steuereinheit SE verbunden. Die zentrale Steuereinheit SE weist dazu die Steuerungsausgangsschnittstelle SSA auf. Für den Anschluss eines Control-Panels CP weist die zentrale Steuereinheit SE die Control-Schnittstelle CS auf, die mit der Ausgabe-Schnittstelle CPS des Control-Panels CP verbunden ist. Das Control-Panel CP weist eine eigene Anzeige sowie ein Bedienelement auf. Auf der zentralen Steuereinheit SE ist die Konfiguration für die Steuerungslogik gespeichert. Die Anbindung der zu steuernden Ausgabeeinrichtungen VE1, VZ1 und Quellen Q1, Q2, Q3, Q4, Q5 kann über Ethernet, RS-232, Infrarot, Relais oder generelle I/O Ports erfolgen. Die Steuerungslogik wird über eine Cloud bereitgestellt und kann in einen Speicher der zentralen Steuereinheit SE geladen werden.

Mit der zentralen Steuereinheit SE ist ebenfalls die Konfigurationssteuereinheit KSE lösbar verbunden, die in diesem Ausführungsbeispiel separat angeordnet ist. Die zentrale Steuereinheit SE weist dazu eine Schnittstelle auf, ebenso die Konfigurationssteuereinheit KSE. Die Schnittstelle der separaten Konfigurationssteuereinheit ist hierbei direkt mit der Schnittstelle der zentralen Steuereinheit verbunden.

Zur Konfiguration der Gerichtssaal- Mediensystemsteuerung GMS erfolgt eine Abfrage von Daten zur Installation und/oder Konfiguration der zentralen Steuereinheit SE. Die Daten sind in einem Speicher der separaten Konfigurationssteuereinheit KSE gespeichert. Die Daten enthalten die für den betreffenden Gerichtssaal, in dem die Gerichtssaal-Mediensystemsteuerung GMS angewandt werden soll, installations- und/oder konfigurationsrelevante Einstellungen. Diese Daten werden von der zentralen Steuereinheit SE eingelesen. Danach erfolgt die Installation und/oder Konfiguration auf der zentralen Steuereinheit SE. Auf der zentralen Steuereinheit SE wird dazu ein Programm ausgeführt.

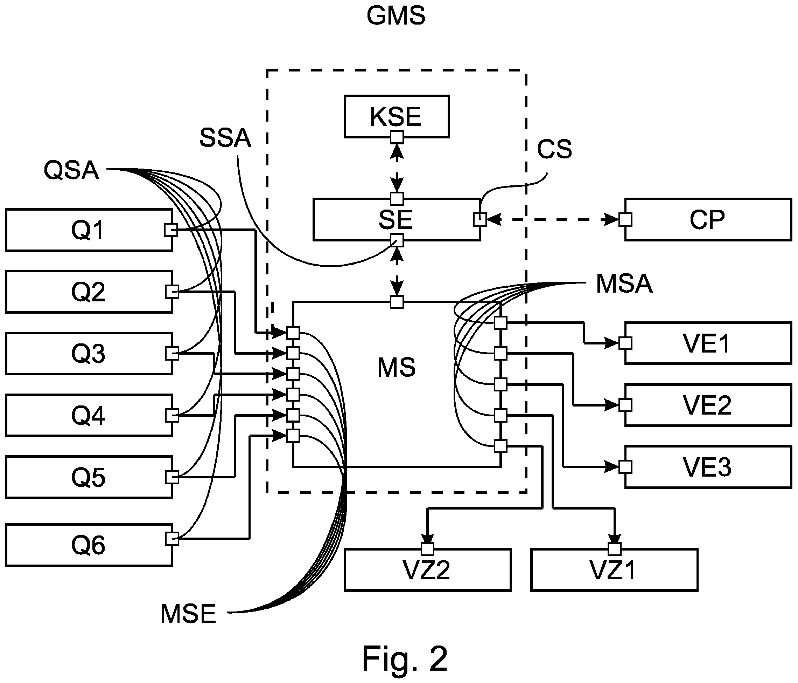

Ein weiteres Ausführungsbeispiel der erfindungsgemäßen Gerichtssaal-Mediensystemsteuerung GMS zeigt Fig. 2. Die erfindungsgemäße Gerichtssaal-Mediensystemsteuerung GMS weist ebenfalls die Matrix-Schaltung MS auf. Mit der Matrix-Schaltung MS sind sechs Quellen Q1, Q2, Q3, Q4, Q5, Q6 über jeweils eine Eingabe-Schnittstelle MSE verbunden. Jede Quelle Q1, Q2, Q3, Q4, Q5, QS6 weist dazu eine Ausgabe-Schnittstelle QSA auf.

Die Matrix-Schaltung MS weist außerdem fünf Ausgabe-Schnittstellen MSA auf, mit denen jeweils eine Ausgabeeinrichtung VE1, VE2, VE3, VZ1, VZ2 verbunden ist. Eine erste Ausgabeeinrichtung VE1 ist eine Ausgabeeinrichtung, die für den Vorsitzenden Richter zur Verfügung steht. Die beiden weiteren ersten Ausgabeeinrichtungen VE2, VE3 sind dafür eingerichtet, Bild- und/oder Toninhalte den Prozessbeteiligten auszugeben. Die zweiten Ausgabeeinrichtungen VZ1, VZ2 sind Ausgabeeinrichtungen, die für die Öffentlichkeit bestimmte Bild- und Toninhalte anzeigen. Jede Ausgabeeinrichtung VE1, VE2, VE3, VZ1, VZ2 weist ebenfalls eine Schnittstelle auf.

Mit der zentralen Steuereinheit SE ist die Konfigurationssteuereinheit KSE lösbar verbunden, die in diesem Ausführungsbeispiel ebenfalls separat angeordnet ist. Die zentrale Steuereinheit SE weist dazu eine Schnittstelle auf, ebenso die Konfigurationssteuereinheit KSE. Über das Bedienelement des Control-Panels CP werden sowohl eine der Quellen Q1, Q2, Q3, Q4, Q5, Q6 zum Empfang der Bild- und/oder Toninhalte als auch die die empfangenen Bild- und/oder Toninhalte ausgebenden Ausgabeeinrichtungen VE1, VE2, VE3, VZ1, VZ2 ausgewählt.

Die Konfiguration der Gerichtssaal- Mediensystemsteuerung GMS in diesem Ausführungsbeispiel erfordert einen zum ersten Ausführungsbeispiel (s. Fig. 1) unterschiedlichen Datensatz im Speicher der Konfigurationssteuereinheit KSE aufgrund der unterschiedlichen Anzahl und Art der Quellen Q1, Q2, Q3, Q4, Q5, Q6 und Ausgabeeinrichtungen VE1, VE2, VE3, VZ1, VZ2.

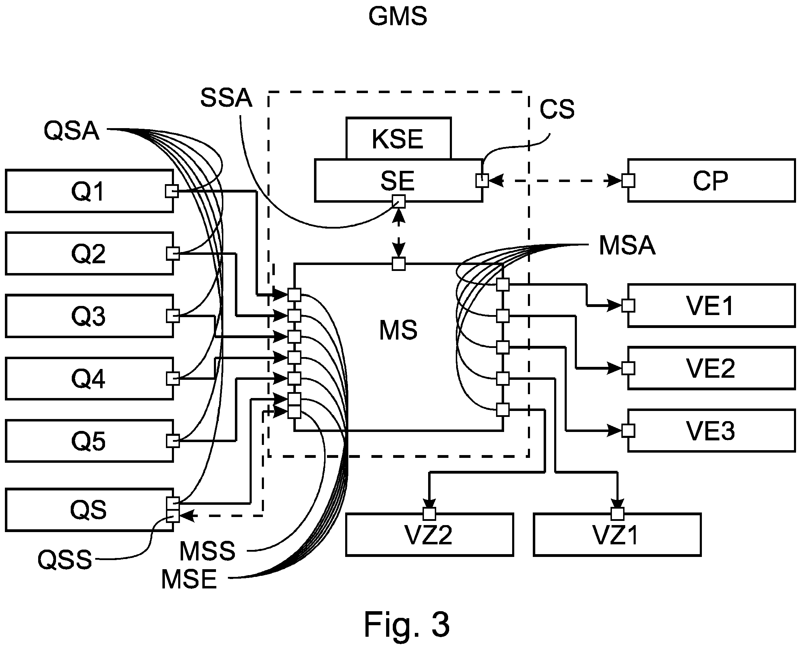

Fig. 3 zeigt eine Variante des vorherstehenden Ausführungsbeispiels (s. Fig. 2) der erfindungsgemäßen Gerichtssaal-Mediensystemsteuerung GMS, wobei eine der Quellen Q1, Q2, Q3, Q4, Q5, QS eine steuerbare Quelle QS ist. Die steuerbare Quelle QS ist mit der Matrix-Schaltung MS über die Ausgabe-Schnittstelle QSA mit der Eingabe-Schnittstelle MSE verbunden. Zusätzlich ist die Eingabe-Schnittstelle QSS der steuerbaren Quelle QS mit der Ausgabe-Schnittstelle MSS der Matrix-Schaltung MS verbunden. Über das Bedienelement des Control-Panels CP kann der Bediener des Control-Panels CP die von der steuerbaren Quelle QS empfangenen Bild- und/oder Toninhalte bearbeiten. Insbesondere können die angezeigten Bild- und/oder Toninhalte über die zentrale Steuereinheit SE z.B. ausgeschnitten und/oder zugeschnitten werden und/oder die Lautstärke geändert werden.

Die Konfigurationssteuereinheit KSE ist in diesem Ausführungsbeispiel an der zentralen Steuereinheit SE angeordnet. Die zentrale Steuereinheit SE weist dazu eine Schnittstelle auf, ebenso die Konfigurationssteuereinheit KSE, beide sind mittels einer Steckverbindung lösbar verbunden. Die Steckverbindung ist vorzugsweise modular aufgebaut, wobei für unterschiedliche Gehäusevarianten und -kombinationen der zentralen Steuereinheit SE und der Konfigurationssteuereinheit KSE Anschlussmöglichkeiten von Steckern, Buchsen, Kupplungen oder Muffen zur Verfügung stehen.

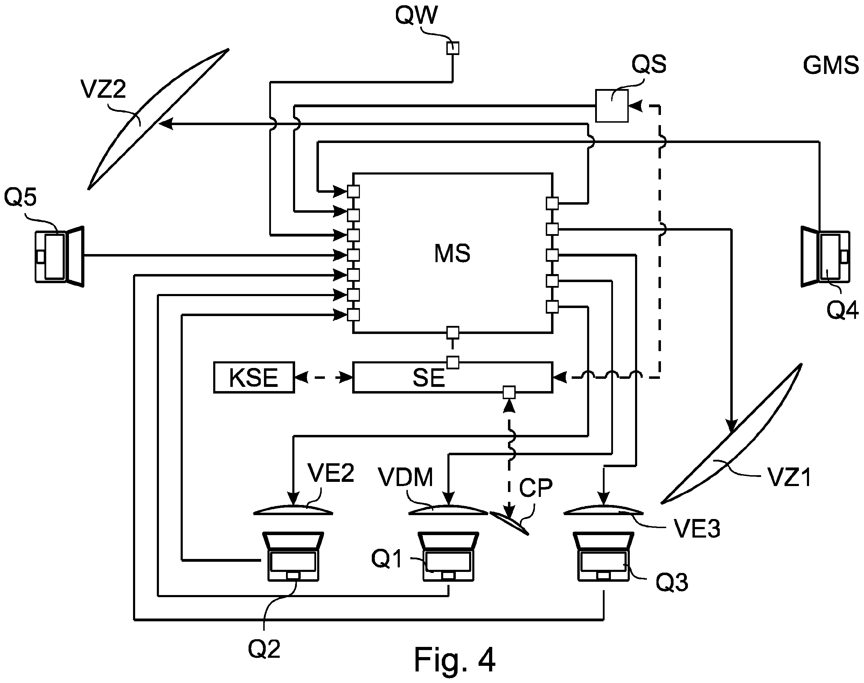

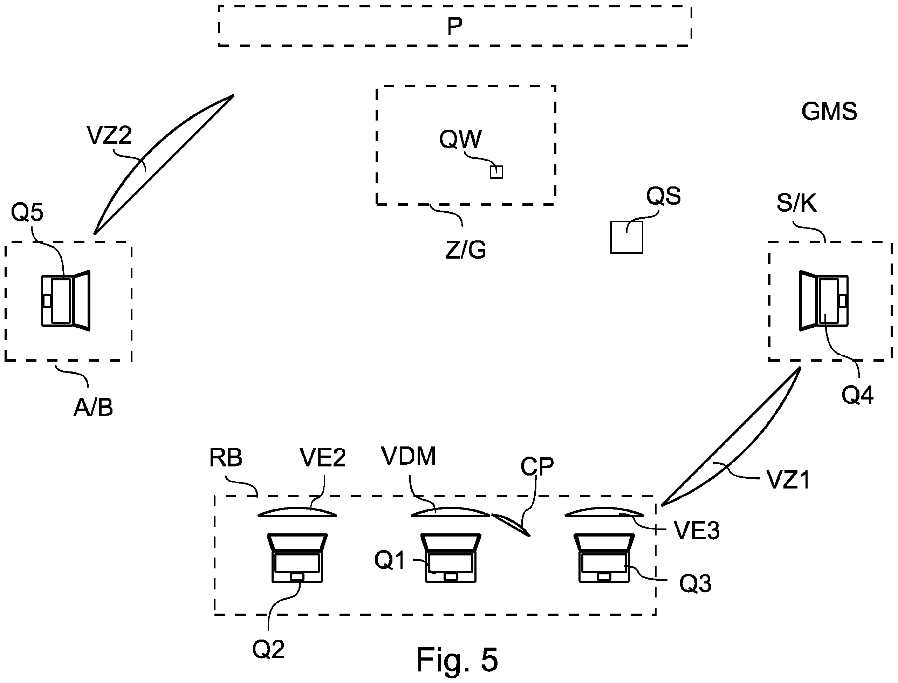

Fig. 4 und Fig. 5 zeigen eine beispielhafte Anordnung eines Ausführungsbeispiels der erfindungsgemäßen Gerichtssaal-Mediensystemsteuerung GMS in einem Gerichtssaal. Der Gerichtssaal weist einen öffentlich zugänglichen Bereich für Zuschauer P, eine Richterbank RB mit jeweils einem Platz für den Vorsitzenden Richter und zwei Beisitzern, einen Bereich Z/G für Zeugen bzw. Gutachter, sowie jeweils einen Bereich für die Prozessparteien, Klage S/K und Verteidigung A/B, auf.

Die Gerichtssaal-Mediensystemsteuerung GMS weist als zentrales Element die Matrix-Schaltung MS auf, mit der sämtliche Quellen Q1, Q2, Q3, Q4, Q5, QW, QS über Quell-Schnittstellen QSA verbunden sind. Die Quellen Q1, Q2, Q3, Q4, Q5, QW, QS sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine Quelle QW anschließen kann. Außerdem ist mit der Matrix-Schaltung MS eine Dokumentenkamera QS verbunden, die eine steuerbare Quelle QS darstellt.

Mit der Matrix-Schaltung MS sind weiterhin die Ausgabeeinrichtungen VDM, VE2, VE3, VZ1, VZ2 über Ausgabe-Schnittstellen MSA angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben.

Die zweiten Ausgabeeinrichtungen VZ1, VZ2 sind öffentlich zugängliche Ausgabeeinrichtungen, in diesem Ausführungsbeispiel Großbildschirme oder -leinwände. Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes. Mit der zentralen Steuereinheit SE ist ebenfalls die Konfigurationssteuereinheit KSE lösbar verbunden, die separat angeordnet ist.

Die Steuerung des Gerichtssaal-Mediensystem GMS erfolgt über ein Control-Panel CP. Der Vorsitzende Richter kann mittels des Control-Panel CP die gesamte Technik des Gerichtssaal-Mediensystem GMS im Sitzungssaal steuern. Es ist aber auch möglich, diese Steuerung über das Control-Panel CP an eine andere Person zu übertragen, so dass der Vorsitzende Richter damit nicht zusätzlich belastet wird. Der Bediener des Control-Panels CP wählt mittels des Bedienelements des Control-Panels CP eine der Quellen Q1, Q2, Q3, Q4, Q5, QW, QS zum Empfang der Bild- und/oder Toninhalte. Diese Auswahl wird von dem Control-Panel CP an die zentrale Steuereinheit SE gesendet.

Die empfangenen Bild- und/oder Toninhalte werden dabei nicht auf der Anzeige des Control-Panel CP selbst angezeigt, sondern zunächst auf der Master-Ausgabeeinrichtung VDM, die eine Vorschaufunktion ausübt. Hier kann der Vorsitzende Richter die empfangenen Bild- und/oder Toninhalte prüfen. Zusätzlich kann der Vorsitzende Richter mittels der Master-Ausgabeeinrichtung VDM die ausgewählten und auf der Master-Ausgabeeinrichtung VDM angezeigten Bild- und/oder Toninhalte verändern und bearbeiten, z.B. ausschneiden, zuschneiden oder die Lautstärke ändern. Außerdem kann der Vorsitzende Richter die von der steuerbaren Quelle QS empfangenen Bild- und/oder Toninhalte ebenfalls in gleicher Weise mittels des Control-Panels CP bearbeiten. Im Anschluss wählt der Vorsitzende Richter oder der Bediener des Control-Panels CP mittels des Control-Panels CP eine oder eine Mehrzahl der Ausgabeeinrichtungen VDM, VE2, VE3, VE4, VZ1, VZ2 zur Ausgabe der von der ausgewählten Quelle Q1, Q2, Q3, Q4, Q5, QW, QS empfangenen Bild- und/oder Toninhalte aus. Die empfangenen Bild- und/oder Toninhalte werden dann auf der oder den ausgewählten Ausgabeeinrichtungen VDM, VE2, VE3, VE4, VZ1, VZ2 angezeigt.

Eine weitere Quelle ist eine Videokonferenz, die ebenfalls mittels des Control-Panels CP ausgewählt werden kann. Das erfindungsgemäße Gerichtssaal-Mediensystem GMS ist in der Lage, die Mimik und Gestik des gesamten Spruchkörpers und der anwesenden Prozessbeteiligten dauerhaft und in hochauflösender Qualität zu übertragen. Beiträge von Prozessbeteiligten, die körperlich nicht im Sitzungssaal anwesend sind, werden auf diese Weise über die vorhandenen Ausgabeeinrichtungen VDM, VE2, VE3, VE4, VZ1, VZ2 allen Anwesenden zugänglich gemacht.

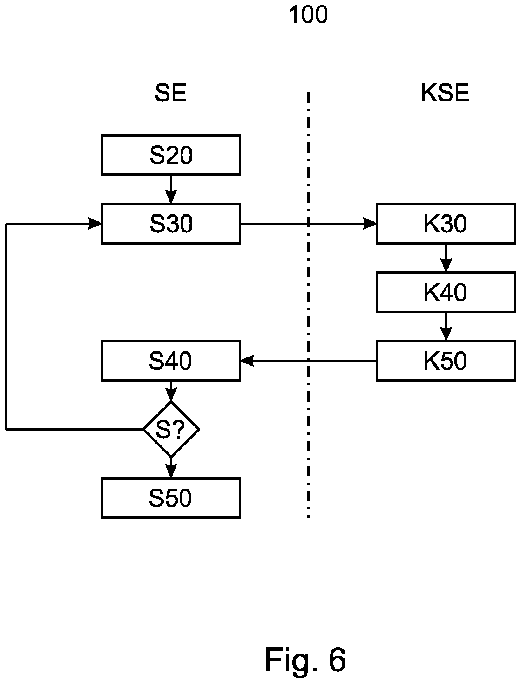

Ein Ausführungsbeispiel des erfindungsgemäßen Verfahrens 100 zur Durchführung eines Konfigurationsprozesses einer Gerichtssaal-Mediensystemsteuerung GMS zeigt Fig. 6. In diesem Ausführungsbeispiel wird eine Standard-Installation mit einer Standard-Konfiguration der Gerichtssaal-Mediensystemsteuerung GMS (s. Fig. 1) dargestellt.

Das Verfahren 100 beginnt mit dem Start S20 des Installationsprogramms, das in einem Speicher der zentralen Steuereinheit SE abgelegt ist. Die zentrale Steuereinheit SE sendet S30 dann eine Abfrage von Daten zur Installation und/oder Konfiguration eines an die zentrale Steuereinheit SE angeschlossenen Peripheriegerätes (s. Fig. 1), z.B. eine erste Ausgabeeinrichtung VE1, an die Konfigurationssteuereinheit KSE. Die Konfigurationssteuereinheit KSE empfängt K30 diese Abfrage, die von der Steuereinheit der Konfigurationssteuereinheit KSE verarbeitet wird K40. Die Daten zur Standard-Installation und/oder Standard-Konfiguration des Peripheriegerätes sind auf einem Speicher in der Konfigurationssteuereinheit KSE gespeichert und werden von der Steuereinheit der Konfigurationssteuereinheit KSE aus dem Speicher der Konfigurationssteuereinheit KSE ausgelesen.

Die Daten zur Installation und/oder Konfiguration werden danach von der Steuereinheit der separaten Konfigurationssteuereinheit KSE an die zentrale Steuereinheit SE gesendet K50. Diese Daten werden von der zentralen Steuereinheit SE empfangen S40. Das im Speicher der zentralen Steuereinheit SE abgelegte Installationsprogramm installiert und konfiguriert das Peripheriegerät derart, dass die Funktionalitäten und/oder Anzeigeinhalte des Peripheriegerätes aktiviert werden. Nach dieser Aktivierung führt das im Speicher der zentralen Steuereinheit SE abgelegte Installationsprogramm eine interne Abfrage S? durch, ob sämtliche an die zentrale Steuereinheit SE angeschlossenen Peripheriegeräte (s. Fig. 1) konfiguriert sind. Sind alle an die zentrale Steuereinheit SE angeschlossenen Peripheriegeräte konfiguriert, wird im letzten Schritt des Verfahrens 100 die Installation beendet S50. Sind nicht sämtliche an die zentrale Steuereinheit SE angeschlossene Peripheriegeräte konfiguriert, wird ein weiteres, noch nicht konfiguriertes an die zentrale Steuereinheit SE angeschlossenes Peripheriegerät konfiguriert. Dazu wird das Verfahren 100 mit dem Senden einer Abfrage S30 von Daten zur Installation und/oder Konfiguration eines weiteren an die zentrale Steuereinheit SE angeschlossenen Peripheriegerätes wiederaufgenommen. Die Verfahrensschritte S30 (Senden einer Abfrage von Daten zur Installation und/oder Konfiguration eines an die zentrale Steuereinheit SE angeschlossenen Peripheriegerätes), K30 (Empfang der Abfrage), K40 (Verarbeitung der Abfrage), K50 (Senden der Daten der Konfiguration), S40 (Empfang der Daten) und schließlich die Abfrage S?, ob sämtliche an die zentrale Steuereinheit SE angeschlossenen Peripheriegeräte konfiguriert sind, werden wiederholt. Nach Beendigung der Installation S50 durch die zentrale Steuereinheit SE sind alle an die zentrale Steuereinheit SE angeschlossenen Peripheriegeräte konfiguriert, die Gerichtssaal-Mediensystemsteuerung GMS ist betriebsbereit. Im weiteren Verlauf des Betriebes des Gerichtssaal-Mediensystems wird nicht mehr auf die separate Konfigurationssteuereinheit zugegriffen. In einem weiteren Ausführungsbeispiel wird die separate Konfigurationssteuereinheit von der zentralen Steuereinheit entkoppelt.

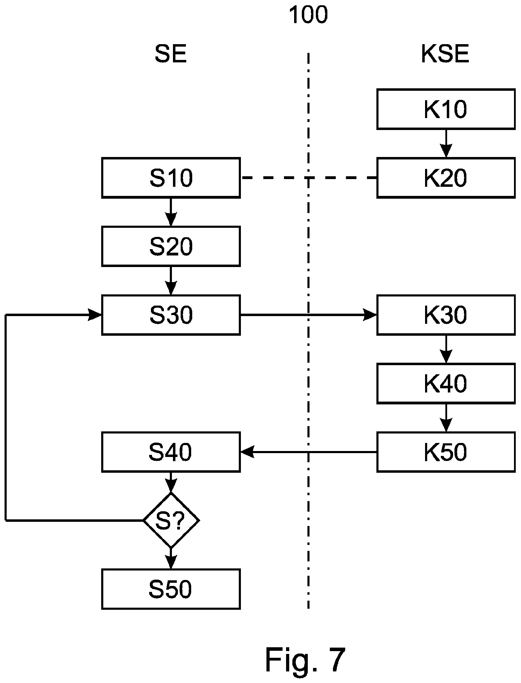

Fig. 7 zeigt ein weiteres Ausführungsbeispiel des erfindungsgemäßen Verfahrens 100 zur Durchführung eines Konfigurationsprozesses einer Gerichtssaal-Mediensystemsteuerung GMS, wobei eine angepasste Installation und Konfiguration durchgeführt wird. Das Verfahren 100 beginnt mit der Eingabe K10 der Konfiguration der Gerichtssaal-Mediensystemsteuerung GMS in den Speicher der Konfigurationssteuereinheit KSE. Die Konfigurationssteuereinheit KSE ist dazu üblicherweise nicht mit der zentralen Steuereinheit SE verbunden. Der Speicher kann ein für die Eingabe K10 geeignetes Programm aufweisen, das mittels der Steuereinheit und dem darin angeordneten Prozessor der Konfigurationssteuereinheit KSE ausgeführt wird.

Die im Speicher der Konfigurationssteuereinheit KSE abgelegte Konfiguration beinhaltet Daten für eine an den Gerichtssaal und/oder den Nutzer angepasste Installation und/oder Konfiguration sowie Konfigurationsdaten zur Hardware-Konfiguration und/oder Software-Konfiguration der mit der zentralen Steuereinheit SE verbundenen Peripheriegeräte. Insbesondere beinhalten die Daten Informationen über alle mit der zentralen Steuereinheit SE verbundenen Ausgabeeinrichtungen VDM, VE1, VE2, VE3, VE4, VE5, VZ1, VZ2. Die Informationen beinhalten z.B. die Art einer jeden der Ausgabeeinrichtungen VDM, VE1, VE2, VE3, VE4, VE5, VZ1, VZ2. Eine Ausgabeeinrichtung kann z.B. dafür vorgesehen und geeignet sein, ausschließlich Bildinhalte, ausschließlich Toninhalte oder Bild- und Toninhalte auszugeben. Zusätzlich beinhalten die Daten Informationen für eine an einen Nutzer individuell angepasste Konfiguration. So kann z.B. eine bestimmte Lautstärke und/oder Helligkeit einer bestimmten Ausgabeeinrichtung angepasst und mittels der Gerichtssaal-Mediensystemsteuerung GMS eingestellt werden.

Außerdem beinhalten die Daten Informationen zu den an die zentrale Steuereinheit SE angeschlossenen Quellen Q1, Q2, Q3, Q4, Q5, QW, QS. Die Informationen beinhalten ebenfalls z.B. die Art einer jeden angeschlossenen Quelle Q1, Q2, Q3, Q4, Q5, QW, QS. Eine Quelle kann z.B. dafür vorgesehen und geeignet sein, Quelle von ausschließlich Bildinhalten, ausschließlich Toninhalten oder Bild- und Toninhalten zu sein. Dabei können die Daten optional Informationen nur eines Teils der Quellen Q1, Q2, Q3, Q4, Q5, QW, QS beinhalten. Bei Vorhandensein einer freien Quelle QW (s. Fig. 4, 5) ist die freie Quelle QW nicht individuell konfigurierbar, weil der Anschluss der freien Quelle dafür vorgesehen ist, unterschiedliche Peripheriegeräte an die zentrale Steuereinheit SE anzuschließen. Die freie Quelle QW wird daher mittels Daten für eine Standard-Konfiguration installiert und konfiguriert.

Die Daten beinhalten ebenfalls Informationen für die Installation und Konfiguration des Control-Panels CP. Mittels des Control-Panels CP werden die steuerbaren Peripheriegeräte, insbesondere die steuerbare Quelle QS (s. Fig. 3, 4, 5) sowie die auf dem Control-Panel CP angezeigten Ausgabeinhalte konfiguriert. Auf gleiche Weise beinhalten die Daten Informationen für eine an einen Gerichtssaal angepasste Konfiguration. Der Speicher der Konfigurationssteuereinheit KSE ist derart bemessen, dass eine Mehrzahl an Konfigurationen von unterschiedlich ausgeführten Gerichtssaal-Mediensystemsteuerungen GMS in dem Speicher abgelegt werden können.

Nach der Eingabe K10 der Konfiguration wird die Konfigurationssteuereinheit KSE mit der zentralen Steuereinheit SE verbunden K20, S10. Der weitere Verlauf des Verfahrens 100 entspricht dem vorigen Ausführungsbeispiel (s. Fig. 6). Das Installationsprogramm, das in einem Speicher der zentralen Steuereinheit SE abgelegt ist, wird gestartet S20. Die zentrale Steuereinheit SE sendet S30 dann eine Abfrage von Daten zur Installation und/oder Konfiguration eines an die zentrale Steuereinheit SE angeschlossenen Peripheriegerätes an die Konfigurationssteuereinheit KSE. Die Konfigurationssteuereinheit KSE empfängt K30 diese Abfrage, die von der Steuereinheit der Konfigurationssteuereinheit KSE verarbeitet wird K40. Die Daten zur Standard-Installation und/oder Standard-Konfiguration des Peripheriegerätes sind auf einem Speicher in der Konfigurationssteuereinheit KSE gespeichert und werden von der Steuereinheit der Konfigurationssteuereinheit KSE aus dem Speicher der Konfigurationssteuereinheit KSE ausgelesen.

Die Daten zur Installation und/oder Konfiguration werden danach von der Steuereinheit der separaten Konfigurationssteuereinheit KSE an die zentrale Steuereinheit SE gesendet K50. Diese Daten werden von der zentralen Steuereinheit SE empfangen S40. Das im Speicher der zentralen Steuereinheit SE abgelegte Installationsprogramm installiert und konfiguriert das Peripheriegerät derart, dass die Funktionalitäten und/oder Anzeigeinhalte des Peripheriegerätes aktiviert werden. Nach dieser Aktivierung führt das im Speicher der zentralen Steuereinheit SE abgelegte Installationsprogramm eine interne Abfrage S? durch, ob sämtliche an die zentrale Steuereinheit SE angeschlossenen Peripheriegeräte konfiguriert sind. Sind alle an die zentrale Steuereinheit SE angeschlossenen Peripheriegeräte konfiguriert, wird im letzten Schritt des Verfahrens 100 die Installation beendet S50. Andernfalls wird das Verfahren 100 mit dem Senden einer Abfrage S30 von Daten zur Installation und/oder Konfiguration eines weiteren an die zentrale Steuereinheit SE angeschlossenen Peripheriegerätes wieder aufgenommen.

### BEZUGSZEICHENLISTE

- GMS: Gerichtssaal-Mediensystemsteuerung
- VE1, VE2, VE3, VE4, VE5: Erste Ausgabeeinrichtung
- VDM: Master-Ausgabeeinrichtung
- VZ1, VZ2: Zweite Ausgabeeinrichtung
- MSA: Ausgabe-Schnittstelle der Matrix-Schaltung
- MS: Matrix-Schaltung
- MSE: Eingabe-Schnittstelle der Matrix-Schaltung
- MSS: Steuerungseingangsschnittstelle
- KSE: Konfigurationssteuereinheit
- SE: Zentrale Steuereinheit
- SSA: Steuerungsausgangsschnittstelle
- CS: Control-Schnittstelle
- CPS: Ausgabe-Schnittstelle Control-Panel
- CP: Control-Panel
- Q1, Q2, Q3, Q4, Q5, Q6: Quelle
- QS: Steuerbare Quelle
- QW: Freie Quelle
- QSA: Quell-Schnittstelle
- RB: Richterbank
- P: Zuschauerbereich
- Z/G: Bereich für Zeugen und Gutachter
- S/K: Bereich für Staatsanwalt/Klage
- A/B: Bereich für Verteidigung
- 100: Verfahren zur Durchführung eines Installations- und/oder Konfigurationsprozesses
- S10: Herstellung der Verbindung Zentrale Steuereinheit-Konfigurationssteuereinheit
- S20: Start des Installations-/Konfigurations-Programms
- S30: Sendung Abfrage
- S40: Empfang Antwort
- S?: Interne Abfrage
- S50: Beenden der Installation/Konfiguration
- K10: Eingabe Konfiguration
- K20: Herstellung der Verbindung Konfigurationssteuereinheit-Zentrale Steuereinheit
- K30: Empfang Abfrage
- K40: Abarbeiten der Abfrage
- K50: Sendung Antwort

## Patentansprüche

1. Verfahren (100) zur Durchführung eines Installations- und/oder Konfigurationsprozesses einer Gerichtssaal-Mediensystemsteuerung (GMS) mit den Verfahrensschritten
• Ausführen eines Programmes zur Installation und/oder Konfiguration einer Gerichtssaal-Mediensystemsteuerung (GMS) auf einer zentralen Steuereinheit (SE) der Gerichtssaal-Mediensystemsteuerung (GMS),
• Abfrage von Daten zur Installation und/oder Konfiguration,
wobei die Daten auf einer separaten Konfigurationssteuereinheit (KSE) gespeichert sind,
• Einlesen der Daten zur Installation und/oder Konfiguration,
wobei die Daten für den betreffenden Gerichtssaal installations- und/oder konfigurationsrelevante Daten enthalten
• Installation und/oder Konfiguration anhand der Daten zur Installation und/oder Konfiguration auf der zentralen Steuereinheit (SE).

2. Verfahren (100) zur Durchführung eines Konfigurationsprozesses einer Gerichtssaal-Mediensystemsteuerung (GMS) nach Anspruch 1
**dadurch gekennzeichnet, dass**
das Programm zur Installation und/oder Konfiguration in einem ersten Verfahrensschritt einen ersten Installations- und/oder Konfigurationsschritt ausführt,
wobei der erste Installations- und/oder Konfigurationsschritt eine Standard-Installation und/oder Standard-Konfiguration ist.

3. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die Daten zur Installation und/oder Konfiguration auf der separaten Konfigurationssteuereinheit (KSE) Daten für eine an den Gerichtssaal und/oder den Nutzer angepasste Installation und/oder Konfiguration sind,
und/oder
auf der separaten Konfigurationssteuereinheit (KSE) Konfigurationsdaten zur Hardware-Konfiguration und/oder Software-Konfiguration gespeichert sind und diese Konfigurationsdaten ausgelesen werden.

4. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die Abfrage (S30) gesendet wird.

5. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die Abfrage in einer Steuereinheit der separaten Konfigurationssteuereinheit (KSE) verarbeitet wird (K40),
wobei die Daten zur Installation und/oder Konfiguration von der Steuereinheit der separaten Konfigurationssteuereinheit (KSE) aus einem Speicher der Konfigurationssteuereinheit (KSE) ausgelesen werden.

6. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die Daten zur Installation und/oder Konfiguration von der Steuereinheit der separaten Konfigurationssteuereinheit (KSE) an die zentrale Steuereinheit (SE) gesendet werden (K50),
und/oder
das Auslesen der Konfigurationsdaten durch die separate Konfigurationssteuereinheit (KSE) selbst erfolgt.

7. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die Konfigurationsdaten Informationen zur Konfiguration der mit der zentralen Steuereinheit (SE) verbundenen Peripheriegeräte beinhalten,
wobei die mit der zentralen Steuereinheit (SE) verbundenen Peripheriegeräte Quellen (Q1, Q2, Q3, Q4, Q5, Q6, QS, QW) und/oder Ausgabeeinrichtungen (VDM, VE1, VE2, VE3, VE4, VE5, VZ1, VZ2) beinhalten,
wobei die Konfigurationsdaten Informationen nur eines Teils der Quellen (Q1, Q2, Q3, Q4, Q5, Q6, QS, QW) beinhalten, und
wobei die Konfigurationsdaten Informationen aller mit der zentralen Steuereinheit (SE) verbundenen Ausgabeeinrichtungen (VDM, VE1, VE2, VE3, VE4, VE5, VZ1, VZ2) beinhalten.

8. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
den Zugriff auf die Konfigurationsdaten der separaten Konfigurationssteuereinheit (KSE) ein auf der separaten Konfigurationssteuereinheit (KSE) angeordneter Prozessor steuert,
wobei der Prozessor auf einen Speicher der separaten Konfigurationssteuereinheit (KSE) zugreift und die Konfigurationsdaten ausliest.

9. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die separate Konfigurationssteuereinheit (KSE) lösbar mit der zentralen Steuereinheit (SE) verbunden ist,
wobei die separate Konfigurationssteuereinheit (KSE) über eine Steckverbindung mit der zentralen Steuereinheit (SE) verbunden (K20) wird,
wobei die Steckverbindung eine modulare Steckverbindung ist.

10. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
an das System angeschlossene Peripheriegeräte, Funktionalitäten und/oder Anzeigeinhalte von anderen an die Gerichtssaal-Mediensystemsteuerung (GMS) angeschlossenen Peripheriegeräten aktiviert werden.

11. Verfahren (100) zur Durchführung eines Konfigurationsprozesses einer Gerichtssaal-Mediensystemsteuerung (GMS) nach einem oder mehreren der vorhergehenden Ansprüche
**dadurch gekennzeichnet, dass**
die Funktionalität und/oder die ausgegebenen Anzeigeinhalte von anderen an die zentrale Steuereinheit (SE) angeschlossenen Peripheriegeräten konfiguriert werden,
wobei eines der Peripheriegeräte ein separat an die zentrale Steuereinheit (SE) angeschlossenes separates Control-Panel (CP) ist,
wobei die durch das separate Control-Panel (CP) steuerbaren Peripheriegeräte (QS) konfiguriert werden, und
wobei die auf dem separaten Control-Panel (CP) angezeigten Ausgabeinhalte konfiguriert werden.

12. Gerichtssaal-Mediensystemsteuerung (GMS), die dafür vorgesehen und dafür geeignet ist, Inhalte zu empfangen und auf verschiedenen Ausgabeeinrichtungen (VDM, VE1, VE2, VE3, VE4, VE5, VZ1, VZ2) auszugeben, umfassend
• eine zentrale Steuereinheit (SE)
• eine Matrix-Schaltung (MS)
mit ein oder mehreren Quellenschnittstellen (MSE)
mit ein oder mehreren Ausgabeschnittstellen (MSA)
• eine separate Konfigurationssteuereinheit (KSE),
wobei die separate Konfigurationssteuereinheit (KSE) über eine Steckverbindung mit der zentralen Steuereinheit (SE) verbunden ist.

13. Gerichtssaal-Mediensystemsteuerung (GMS) nach Anspruch 12,
**dadurch gekennzeichnet, dass**
die Matrix-Schaltung (MS) durch die zentrale Steuereinheit (SE) steuerbar ist.

14. Gerichtssaal-Mediensystemsteuerung (GMS) nach einem oder mehreren der Ansprüche 12 bis 13
**dadurch gekennzeichnet, dass**
an die Quellenschnittstellen (MSE) mindestens eine steuerbare Quelle (QS) angeschlossen ist.

15. Gerichtssaal-Mediensystemsteuerung (GMS) nach einem oder mehreren der Ansprüche 12 bis 14
**dadurch gekennzeichnet, dass**
die separate Konfigurationssteuereinheit (KSE) einen Prozessor aufweist, wobei die separate Konfigurationssteuereinheit (KSE) einen Speicher aufweist, wobei durch den Prozessor der separaten Konfigurationssteuereinheit (KSE) Daten aus einem Speicher der separaten Konfigurationssteuereinheit (KSE) auslesbar sind.
